(19) Europäisches Patentamt
European Patent Office
Office européen des brevets

(11) Veröffentlichungsnummer: **0 254 048 A1**

(12) **EUROPÄISCHE PATENTANMELDUNG**

(21) Anmeldenummer: **87108941.3**

(22) Anmeldetag: **23.06.87**

(51) Int. Cl.4: **C08F 283/08**, C09D 3/00, //(C08F283/08,222:10)

(30) Priorität: **25.06.86 DE 3621207**

(43) Veröffentlichungstag der Anmeldung: **27.01.88 Patentblatt 88/04**

(84) Benannte Vertragsstaaten: **BE DE FR GB NL**

(71) Anmelder: **BASF Aktiengesellschaft**
**Carl-Bosch-Strasse 38**
**D-6700 Ludwigshafen(DE)**

(72) Erfinder: **Taubitz, Christof, Dr.**
**In der Dreispitz 15**
**D-6706 Wachenheim(DE)**
Erfinder: **Gausepohl, Hermann, Dr.**
**Neuweg 10**
**D-6704 Mutterstadt(DE)**
Erfinder: **Seiler, Erhard, Dr.**
**Erpolzheimer Strasse 1**
**D-6700 Ludwigshafen(DE)**
Erfinder: **Schlemmer, Lothar**
**Duisbergerstrase 1 a**
**D-6701 Maxdorf(DE)**

(54) **Propfpolymerisate von Polyphenylenethern.**

(57) Pfropfpolymerisate aus

A) einem Polyphenylenether als Basispolymerem und

B) einem Halbester einer ungesättigten Dicarbonsäure der allgemeinen Formel

$$\begin{array}{l} R^2\text{—C—COOR}^1 \\ \quad\ \ \| \\ R^3\text{—C—COOQ} \end{array} \qquad \text{I}$$

als Pfropfmonomerem ($R^1$ = $C_1$-$C_{25}$-Alkyl, $C_2$-$C_{25}$-Alkylen oder Aryl; $R^2$, $R^3$ = H, Br, Cl, $R^1$; Q = H, Alkali-, Erdalkali-oder Ammoniumkation)

C) gegebenenfalls weiteren olefinisch ungesättigten Monomeren, deren Herstellung und Verwendung.

EP 0 254 048 A1

## Pfropfpolymerisate von Polyphenylenethern

Die vorliegende Erfindung betrifft Pfropfpolymerisate aus

A) einem Polyphenylenether als Basispolymerem und

B) einem Halbester einer ungesättigten Dicarbonsäure der allgemeinen Formel

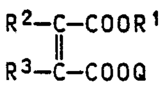 I

als Pfropfmonomeren, in welcher die Substituenten folgende Bedeutung haben:

$R^1$ eine $C_1$-$C_{25}$-Alkylgruppe, eine $C_2$-$C_{25}$-Alkylengruppe oder eine Arylgruppe

$R^2$,$R^3$ Wasserstoff, Brom, Chlor oder einen der Reste $R^1$

Q Wasserstoff, ein Alkalimetall, das Äquivalent eines Erdalkalimetalls oder ein Ammoniumkation sowie

C) gegebenenfalls weiteren olelfinisch ungesättigten Monomeren.

Weiterhin betrifft die Erfindung die Herstellung dieser Pfropfpolymerisate und deren Verwendung als Formteile oder zur Herstellung von Beschichtungen.

Die Modifizierung von Polyphenylenethern durch Pfropfung mit olefinisch ungesättigten Verbindungen zur Verbesserung der anwendungstechnischen Eigenschaften ist bereits bekannt. So können nach üblichen Methoden z.B. Styrol (vgl. z.B. US-Patente 3 862 263, 4 132 684 oder 4 148 843), Vinylpyridin (vgl. US-Patent 4 278 777), Methylmethacrylat (vgl. EP-A-54 140), ungesättigte Carbonsäuren (vgl. EP-A-25 200) oder eine Mischung aus Styrol und Acrylnitril (vgl. EP-A-83 098 und 59 482, US-Patente 3 522 326 und 4 486 568 sowie DE-A-3 100 534) auf Polyphenylenether pfropfpolymerisiert werden. Eine Mischung von Styrol und Maleinsäureanhydrid (EP-A-17939 oder JP-B-77/19864) wurde auf Polyphenylenether aufgepfropft, um u.a. die Haftfähigkeit auf anorganischen Materialien zu erhöhen. Im allgemeinen arbeitet man in Gegenwart eines organischen Peroxides als Radikalstarter entweder in Lösung, wäßriger Dispersion oder in einem Schmelzextruder.

Es ist weiterhin bekannt, Maleinsäurehalbester zur Pfropfung zu verwenden, jedoch auf anderen Substraten, nämlich Polymere des Ethylens (US-Patentschrift 3,928,497), zur Verbesserung der Haftfestigkeit und der Schmelzfließfähigkeit.

Die bekannten Polyphenyletherpfropfpolymerisate weisen aber noch einige Nachteile auf, insbesondere sind Produkte mit ausreichender Wärmeformbeständigkeit stark verfärbt.

Aufgabe der vorliegenden Erfindung war es daher, modifizierte Polyphenylenetherharze aufzufinden, die diesem Mangel abhelfen.

Demgemäß wurden die eingangs definierten Polyphenylenetherharze gefunden.

Weiterhin wurden Verfahren zur Herstellung dieser Polyphenylenetherharze sowie deren Verwendung gefunden.

Als Basispolymere A eignen sich bekannte Polyphenylenether, die nach üblichen Verfahren aus in ortho-Position durch Alkylgruppen disubstituierten Phenolen durch oxidative Kupplung hergestellt werden (vgl. US-Patente 3 661 848, 3 219 625, 3 378 505, 3 306 874, 3 306 875 und 3 639 656). Geeignete Polyphenylenether sind beispielsweise Poly(2,6-diethyl-1,4-phenylen)-ether, Poly(2-methyl-6-ethyl-1,4-phenylen)-ether, Poly(2-methyl-6-propyl-1,4-phenylen)-ether, Poly(2,6-dipropyl-1,4-phenylen)ether, Poly(2-ethyl-6-propyl-1,4-phenylen)-ether oder Copolymere, wie solche, die 2,3,6-Trimethylphenol enthalten, außerdem Polymermischungen. Bevorzugt ist Poly(2,6-dimethyl-1,4-phenylen)-ether. Die in einem solchen Verfahren hergestellten Polyphenylenether weisen im allgemeinen Molekulargewichte von 10 000 bis 90 000, insbesondere 20 000 bis 80 000, bestimmt nach der in "Macromolecular Synthesis" 1 (1977), Seite 83, angegebenen Methode, auf. Das erfindungsgemäße Pfropfpolymerisat enthält bevorzugt 80 bis 99,9, insbesondere 95 bis 99,7 Gew.% Polyphenylenether.

Die Halbester I einer ungesättigten Dicarbonsäure können in der oben angegebenen Weise substituiert sein. Als Ammoniumkation wird $NH_4^{\oplus}$ oder ein Ammoniumkation mit vier gleichen oder unterschiedlichen $C_1$-$C_{10}$-Alkylsubstituenten verstanden. Die Substituenten müssen, was sich allerdings von selbst versteht, so beschaffen sein, daß sie die Modifizierungsreaktion nicht verhindern. Beispielsweise können $R^2$, $R^3$ und Q Wasserstoff und $R^1$ eine $C_1$-$C_{25}$-Alkylgruppe, insbesondere eine Methyl-, Ethyl-, Propyl-, Butyl-, Pentyl-, 2-Ethylhexyl-oder Dodecylgruppe sein. Die Halbester I liegen im allgemeinen im Pfropfpolymerisat mit 0,1 bis 20, insbesondere 0,3 bis 5 Gew.% vor.

Als pfropfpolymerisierbare Monomere mit olefinischen Doppelbindungen C eignen sich Styrol, Acrylnitril, Methylmethacrylat, Maleinsäureanhydrid oder deren Gemische, bevorzugt in Mengen unter 10 Gew.%, insbesondere unter 3 Gew.%, bezogen auf das Pfropfpolymerisat.

Die erfindungsgemäßen Polymerisate können in bekannter Weise, z.B. durch Zusatz von Verstärkungs-und Füllstoffen, Stabilisatoren, Gleit-und Flammschutzmitteln sowie Farbstoffen und Pigmenten modifiziert werden.

Das Pfropfpolymerisat kann in Lösung oder Dispersion hergestellt werden. Bevorzugt ist jedoch die Pfropfpolymerisation in einem Schmelzextruder. Dazu werden die Komponenten bei Temperaturen von 230 bis 350°C, vorzugsweise zwischen 250 und 300°C innig vermischt und zur Reaktion gebracht, wobei gegebenenfalls der Schmelzpunkt des Polyphenylenethers durch Zusätze variiert werden kann. Vorzugsweise verwendet man einen Zweischneckenextruder, der mit Knetelementen, zum Teil mit rückwärtsförderndem Gewinde, ausgerüstet sein kann. Die Komponenten werden im allgemeinen gemeinsam dosiert und in einer Aufschmelzzone des Extruders aufgeschmolzen. An diese Zone schließt sich üblicherweise die Reaktionszone an. Vor dem Produktaustrag befindet sich im allgemeinen eine Entgasungszone zur Entfernung der flüchtigen Bestandteile. Die Verweilzeit im Extruder beträgt im allgemeinen 0,5 bis 10 Minuten, bevorzugt 1 bis 5 Minuten. Die ausgetragene Schmelze wird üblicherweise granuliert.

Bei der Reaktion kann ein Radikalstarter, der bevorzugt ein organisches Peroxid oder eine Azoverbindung ist, zugegen sein. Solche Radikalstarter sind dem Fachmann bekannt. Zum Beispiel werden organische Peroxide mit einer Halbwertszeit des Zerfalls (vgl. Modern Plastics 36, 1959, Heft 2, Seiten 142 bis 148) bei 200°C von 1 bis 30 Sekunden verwendet. Die Wahl des Radikalstarters richtet sich nach der gewünschten Reaktionstemperatur. Als einzelne Beispiele seien genannt: 1,1-Di-tert.-butyl-peroxy-3,3,5-trimethylcyclohexan, Tert.-butyl-peroxy-isopropylcarbonat, Tert.-butyl-peroxy-3,3,5-trimethylhexoat, Tert.-butyl-peracetat, Tert.-butyl-perbenzoat, 4,4-Di-tert.-butyl-peroxy-valeriansäure-n-butylester, 2,2-Di-tert.-butyl-peroxy-butan, Di-cumyl-peroxid, Tert.-butyl-cumyl-peroxid, 1,3-Bis-(tert.-butyl-peroxy-isopropyl)benzol und Di-tert.-butylperoxid.

Die Radikalstarter können in Mengen unter 10 Gew.%, bevorzugt unter 5 Gew.%, bezogen auf die eingesetzten Reaktionskomponenten, anwesend sein. Man erhält besonders gute Produkte, wenn man, insbesondere bei Temperaturen über 250°C, ohne Zusatz eines Radikalstarters arbeitet.

Die erfindungsgemäßen Polyphenylenetherharze haben eine gute Wärmeformbeständigkeit, gekoppelt mit einer hellen Eigenfarbe, was ihre Gebrauchseigenschaften deutlich erhöht. Sie können ohne Schwierigkeit durch thermoplastische Verformungsverfahren wie Spritzguß oder Extrusion verarbeitet und als Formteile oder zur Beschichtung von Oberflächen eingesetzt werden.

Beispiel 1

99 kg Poly-(2,6-dimethyl-1,4-phenylen)-ether mit einer relativen Viskosität von 0,50, gemessen in 1 gew.%iger Chloroformlösung bei 25°C, und 1 kg 2-Ethylhexylmonomaleinat wurden in einem Zweischneckenextruder bei 270°C miteinander umgesetzt und anschließend in einer Entgasungszone bei 280°C bei vermindertem Druck entgast. Die mittlere Verweilzeit im Extruder betrug 3 Minuten. Die Schmelze wurde zur Kühlung durch ein Wasserbad geleitet, granuliert und getrocknet. Das Granulat war in Toluol löslich. Der IR-spektroskopisch an einem gepreßten Film bestimmte Halbestergehalt im modifizierten Polyphenylenetherharz betrug 0,8 Gew.%.

Beispiel 2

99,5 kg Poly-(2,6-dimethyl-1,4-phenylen)-ether mit einer relativen Viskosität von 0,60, gemessen in 1 gew.%iger Chloroformlösung bei 25°C, und 0,5 kg 2-Ethylhexylmonomaleinat wurden wie in Beispiel 1 pfropfcopolymerisiert. Das Granulat war in Toluol löslich. Der IR-spektroskopisch an einem gepreßten Film bestimmte Halbestergehalt im modifizierten Polyphenylenether betrug 0,4 Gew.%.

## Ansprüche

1. Pfropfpolymerisate aus

A) einem Polyphenylenether als Basispolymerem und

B) einem Halbester einer ungesättigten Dicarbonsäure der allgemeinen Formel

$$\begin{array}{l} R^2-C-COOR^1 \\ \quad\ \| \\ R^3-C-COOQ \end{array} \qquad I$$

als Pfropfmonomerem, in welcher die Substituenten folgende Bedeutung haben:

$R^1$ eine $C_1$-$C_{25}$-Alkylgruppe, eine $C_2$-$C_{25}$-Alkylengruppe oder eine Arylgruppe

$R^2$,$R^3$ Wasserstoff, Brom, Chlor oder einen der Reste $R^1$

Q Wasserstoff, ein Alkalimetall, das Äquivalent eines Erdalkalimetalls oder ein Ammoniumkation

sowie

C) gegebenenfalls weiteren olelfinisch ungesättigten Monomeren.

2. Pfropfpolymerisate nach Anspruch 1, in denen das Pfropfmonomere I der allgemeinen Formel Ia

$$\begin{array}{l} HC{-}COOR^{1a} \\ \quad \| \\ HC{-}COOH \end{array} \qquad Ia$$

entspricht, wobei R [1a] eine $C_1$-$C_{25}$-Alkylgruppe bedeutet.

3. Pfropfpolymerisate nach den Ansprüchen 1 und 2 aus

80 bis 99,9 Gew.% der Komponente A,
0,1 bis 20 Gew.% der Komponente B und
0 bis 10 Gew.% der Komponente C.

4. Pfropfpolymerisate nach Anspruch 3 aus

95 bis 99,7 Gew.% der Komponente A,
0,3 bis 5 Gew.% der Komponente B und
0 bis 3 Gew.% der Komponente C.

5. Verfahren zur Herstellung von Pfropfpolymerisaten gemäß den Ansprüchen 1 bis 4 durch Pfropfung eines Polyphenylenethers mit einem Pfropfmonomeren, dadurch gekennzeichnet, daß man als Pfropfmonomeres ein Monomeres der allgemeinen Formel I und gegebenenfalls weitere olefinische ungesättigte Monomere verwendet.

6. Verfahren nach Anspruch 5, dadurch gekennzeichnet, daß man die Pfropfung bei 230 bis 350°C vornimmt.

7. Verfahren nach den Ansprüchen 5 und 6, dadurch gekennzeichnet, daß man die Pfropfung in Abwesenheit oder praktischer Abwesenheit eines Radikalstarters vornimmt.

8. Verwendung der Pfropfpolymerisate gemäß den Ansprüchen 1 bis 7 als Formteile oder zur Herstellung von Beschichtungen.

Europäisches Patentamt

# EUROPÄISCHER RECHERCHENBERICHT

Nummer der Anmeldung

EP 87 10 8941

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | EP-A-0 025 200 (KANEGAFUCHI) * Seite 8, Zeile 34 - Seite 9, Zeile 17 * | 1 | C 08 F 283/08<br>C 09 D 3/00 //<br>(C 08 F 283/08<br>C 08 F 222:16 ) |
| D,Y | US-A-3 928 497 (OHMORI et al.) * Spalte 3, Zeilen 7-17 * | 1 | |
| | | | RECHERCHIERTE SACHGEBIETE (Int. Cl.4) |
| | | | C 08 F |

Der vorliegende Recherchenbericht wurde für alle Patentansprüche erstellt.

| Recherchenort | Abschlußdatum der Recherche | Prüfer |
|---|---|---|
| DEN HAAG | 29-10-1987 | MEULEMANS R.A.M.G.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82